# EUROPEAN PATENT APPLICATION

(11) **EP 1 320 052 A1**
(43) Date of publication of application: **18.06.2003**
(21) Application number: 01936947.9
(22) Date of filing: 11.06.2001
(51) Int. Cl.: G06F 17/60

(54) **ESTIMATION SYSTEM FOR VEHICLE REPAIR COST**

(30) Priority: 24.07.2000 JP 2000222745
(71) Applicant: TSUBASA SYSTEM CO. LTD., Tokyo 136-0071 (JP)
(72) Inventor: SAKAI, Michimoto, C/O TSUBASA SYSTEM CO., LTD., Tokyo 136-0071 (JP)
(74) Representative: Chettle, Adrian John
(86) International application number: JP0104912
(87) International publication number: WO02008982

(57) **Abstract**

A vehicle repair cost estimating system for estimating a vehicle repair cost by inputting the image of a vehicle to be estimated for repair cost, to the computer. The system comprises a display unit, input means for inputting data and instructions according to the displayed contents of the display unit to the computer, instruction display means for displaying in the display unit an instruction for prompting any of methods to input the image of the vehicle to the computer, and input operation screen display means for displaying an input operation screen according to the designated method in the display unit.

## Description

### Technical Field

The present invention relates to an estimate system for vehicle repair cost, and in particular to a system for inputting a vehicle image to be used when forming (generating) an estimate of a vehicle repair cost, to a computer.

### Background Art

Conventionally, in an estimate system for accident vehicle repair cost using a computer, an image of an accident vehicle has been input according to the following method.
(1) Pictures of an accident vehicle are taken with a digital still camera. The digital still camera is connected to a computer that is installed the estimate system for accident vehicle repair cost. The pictures are preserved in an image file by using general-purpose (versatile) image transfer software.
(2) The estimate system is started, and an operation is conducted to design that images of the accident vehicle should be input.
(3) The estimate system makes the operator specify a place where an image data file exists, displays a list of image data recorded in the specified place, and makes the operator effect a selection.

Furthermore, as a conventional technique of an estimate system for accident vehicle repair cost, there is a technique disclosed in Japanese Patent Application Laid-Open (JP-A) No. 11-232340.

In the conventional technique, a work of taking images in the computer by using the estimate system, conducted by a person assigned to a job of forming an estimate of an accident vehicle repair cost (estimate former) , and a work of correlating the image taken in the computer with repair estimate data are effected by different operations. Therefore, the operations are troublesome.

Furthermore, in the conventional estimate system, an image file of an accident vehicle is stored in some directory in a file system including a plurality of directories (folders) that have a hierarchical structure. In specifying a place where images of an accident vehicle exist, therefore, the system operator must be well versed in the file system (directory structure) and grasp which image is stored in which directory.

Furthermore, in the conventional file system, physical devices such as PC cards or hard disk drives (HDDs) can be grasped as merely logical "drives" irrespective of configuration differences. The system operator needs to grasp correspondence relations between drives and physical devices.

### Disclosure of the Invention

An object of the present invention is to provide an estimate system for vehicle repair cost capable of smoothly conducting the work of inputting vehicle images to a computer in order to form an estimate of a vehicle repair cost.

In accordance with the present invention, there is provided a vehicle repair cost estimate system for forming an estimate by inputting an image of a vehicle that is a subject of forming a repair cost estimate, to a computer, the vehicle repair cost estimate system including: a display unit, input means for inputting data or instructions corresponding to display contents of the display unit to the computer, instruction display means for displaying an instruction for prompting to designate (specify) one of a plurality of methods for inputting a vehicle image to the computer, on the display unit, and input operation screen display means for displaying an input operation screen according to the specified method, on the display unit.

The vehicle is, for example, an automobile (including a freight car and a special vehicle) or a motor bicycle. In the present specification, an "image" is a concept including both a video (dynamic picture) and an image (still picture).

In the present invention, the vehicle repair cost estimate system may further include registration means for registering an image of a vehicle input to the computer by using the input operation screen, as an image of a vehicle of an estimate subject.

Furthermore, in the present invention, the vehicle repair cost estimate system may further include an operation screen display means for displaying an operation screen for registering an image of a vehicle held on a recording medium connected to the computer as an image of a vehicle of an estimate subject, according to a type of the recording medium.

Furthermore, in the present invention, the vehicle repair cost estimate system may further include correlation means for correlating an image of a vehicle registered by the registration means with data concerning estimate input by using the input means.

Furthermore, the input operation screen display means of the present invention may have such a configuration as to display an input operation screen for storing an image of a vehicle picked up by a video camera connected to the computer or an image of a vehicle reproduced by a video reproduction device, as an image of a vehicle of an estimate subject. The video camera or the video reproduction device may be either of analog type and digital type.

Furthermore, the input operation screen display means of the present invention may have such a configuration as to display an input operation screen for inputting an image of a vehicle from a video camera or a video reproduction device to the computer by operating, on the computer, the video camera or video reproduction device connected to the computer.

Furthermore, the input operation screen display means of the present invention preferably have such a configuration as to display an input operation screen for inputting an image of a vehicle from an image scanner to the computer by operating, on the computer, the image scanner connected to the computer.

Furthermore, the input operation screen display means of the present invention preferably have such a configuration as to display an input operation screen for inputting an image of a vehicle from a digital still camera to the computer by operating, on the computer, the digital still camera connected to the computer.

Furthermore, the input operation screen display means of the present invention preferably have such a configuration as to display an input operation screen for the computer to receive an image of a vehicle from another computer that holds the image of the vehicle and that is connected to the computer through a communication line. The other computer is preferably, for example, an HTTP server, an FTP server, a mail server, or a terminal device operated by a client of estimate formation.

Furthermore, the input operation screen display means of the present invention preferably have such a configuration as to display an operation screen for registering an image of a vehicle held on a hard disk, and an operation screen for registering an image of a vehicle held on a recording medium, other than the hard disk, connected to the computer, in accordance with the designation.

The recording medium other than the hard disk is, for example, a floppy disk, an optical disk (such as CD-ROM or PD), an optical magnetic disk, a PC card (such as an SRAM or a flash memory) , a memory card other than the PC card (such as a compact flash, a smart medium, or a memory stick), or magnetic disk. The recording medium should be one that can be recognized as a logical drive when connected to a computer.

According to an estimate system for vehicle repair cost according to the present invention, the work of inputting vehicle images for forming an estimate of a vehicle repair cost can be performed smoothly.

### Brief Description of the Drawings

Fig. 1 is a configuration diagram of an estimate system according to an embodiment of the present invention;
Fig. 2 is a diagram showing a display example of a registration screen;
Fig. 3 is a diagram showing a display example of a tab sheet of "video";
Fig. 4 is a diagram showing a display example of a tab sheet of "scanner";
Fig. 5 is a diagram showing a display example of a tab sheet of "digital camera";
Fig. 6 is a diagram showing a display example of a tab sheet of "file on HDD";
Fig. 7 is a diagram showing a display example of a tab sheet of "file on network";

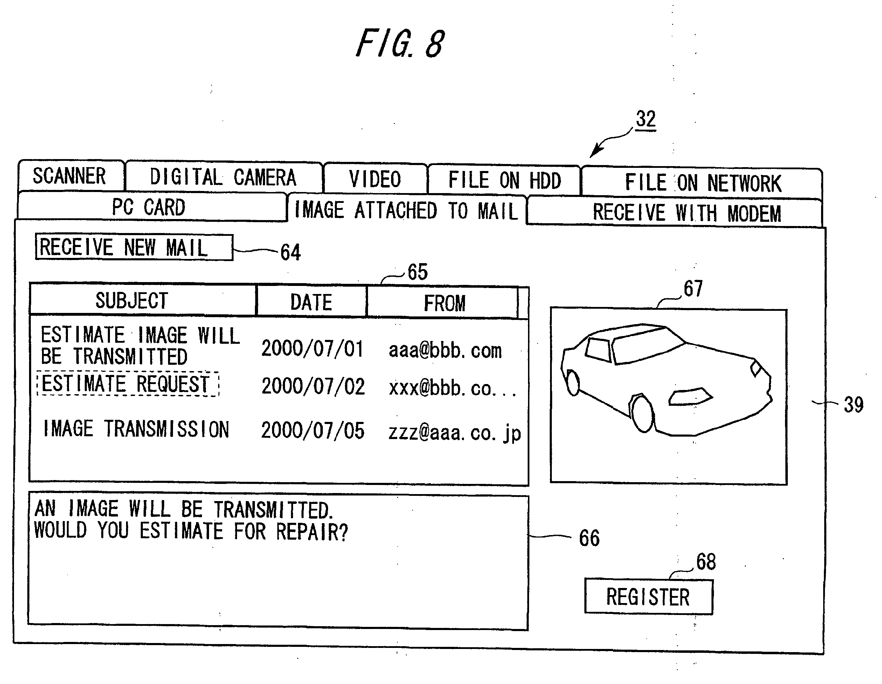

Fig. 8 is a diagram showing a display example of a tab sheet of "image attached to mail";

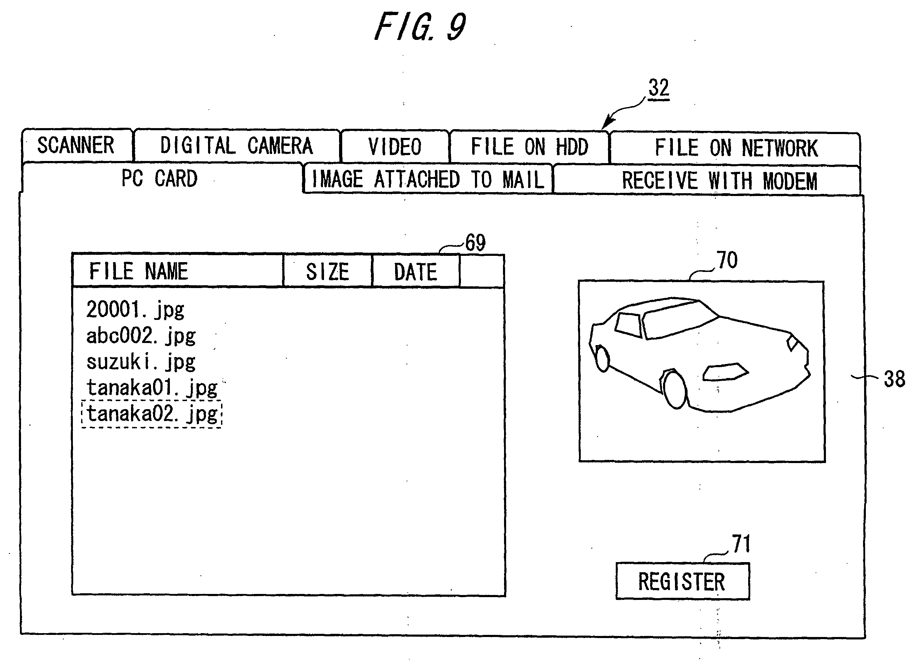

Fig. 9 is a diagram showing a display example of a tab sheet of "PC card";

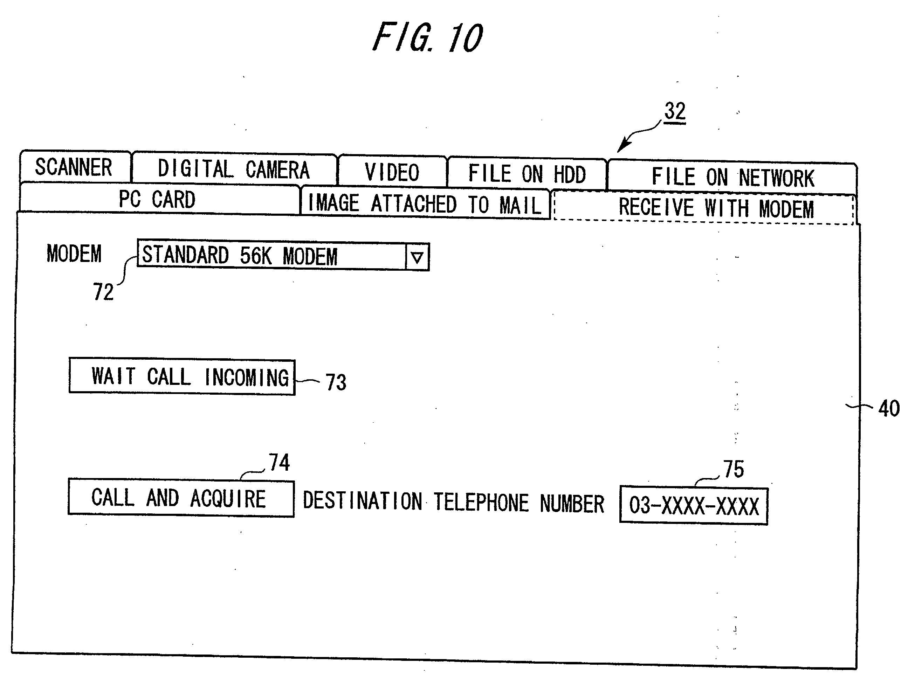

Fig. 10 is a diagram showing a display example of a tab sheet of "receive with modem";
Fig. 11 is a diagram showing an example of a management table; and
Fig. 12 is a diagram showing a variant of an embodiment.

### Best Mode for Carrying out the Invention

Hereafter, the best mode for carrying out the present invention will be described. The embodiment described hereafter exhibits an example, and the present invention is not limited to the configuration of the embodiment.

### <Configuration of repair cost estimate system>

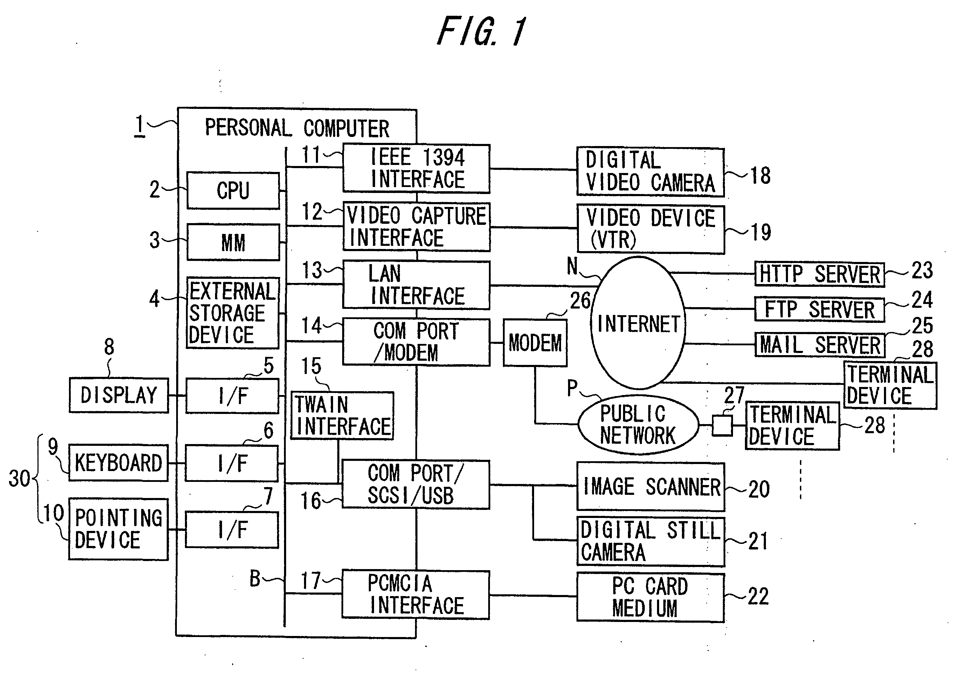

Fig. 1 is a diagram showing a configuration example of a vehicle repair cost estimate system according to an embodiment of the present invention. In Fig. 1, the present system is implemented by executing a computer program that implements the present system on a computer such as a personal computer (PC), a workstation (WS), a mobile computer, or a PDA (Personal Digital Assistant).

In Fig. 1, a PC 1 is shown as an example of a computer. The PC 1 is operated by a person who should form an estimate of vehicle repair cost (estimate former). The PC 1 includes a CPU 2, a main memory (MM) 3, an external storage device 4, and interface circuits (I/Fs) 5 to 7 connected to each other via a bus B.

A display unit 8, such as a cathode-ray tube, a liquid crystal display, or a plasma display, is connected to the I/F 5. A keyboard (KBD) 9 is connected to the I/F 6. A pointing device (PD) 10, such as a mouse, a track ball, a joystick, or a flat space, is connected to the I/F 7. Hereafter, in the case where the keyboard 9 and the PD 10 are referred to collectively, they are referred to as input device 30.

The external storage device 4 is constructed by using a readable/writable recording medium, such as a hard disk (HDD), a floppy disk (FD), an optical disk (such as a PD), or an optical magnetic disk (MO). In this example, an HDD is used. In the case where a floppy disk, an optical disk, or a MO are prepared as the external storage device 4, a drive device (a floppy disk drive (FDD), an optical disk drive, or a MO drive) corresponding to the recording medium is prepared in the PC 1. At least two of the HDD, FDD, optical disk drive, and MO drive described above may be provided in the PC 1.

The external storage device 4 stores an operating system executed by the CPU 2, a plurality of kinds of programs, such as a program concerning a communication protocol, and a program for forming an estimate of vehicle repair cost (hereafter referred to as "estimate software"), and data to be used when executing these programs.

In response to a designation input of the PC 1 operator (estimate former), the CPU 2 copies necessary data from the external storage device 4 onto the MM 3. In addition, the CPU 2 loads a program corresponding to the designation input, from the external storage device 4 onto the MM 3, and executes the program. As a result, the CPU 2 executes processing for taking images of a vehicle in the PC 1 (i.e., for inputting the images of the vehicle to the PC 1), processing for registering the images thus taken in, and processing for correlating the registered video images or images with estimate data.

The MM 3 is constructed by using a RAM and so on. The MM 3 is used as a work area for the CPU 2, and in addition used as a video memory (VRAM) for storing data, such as a text or an image, displayed on the screen of the display 8.

Furthermore, the PC 1 includes an IEEE 1394 interface 11, a video capture interface 12, an LAN interface (communication I/F) 13, a COM port/modem 14 (hereafter referred to as "port 14"), a TWAIN (Technology Without any Interested Name) interface 15, a COM port/SCSI/USB 16 (hereafter referred to as "port 16"), and a PCMCIA interface 17, which are connected to the bus B.

A digital video camera 18 is connected to the IEEE 1394 interface 11. The digital video camera 18 can record a picked up video image on a tape recording medium, and reproduce it. Furthermore, the digital video camera 18 can output an image that is being picked up (shoot) to an external device (such as PC 1) as it is. Here, the digital video camera including a camera for picking up an image or a video and a recording and reproducing device for the picked up image or video is mentioned as an example . Instead of the digital video camera 18, however, a video reproduction device for reproducing an image recorded by using a digital scheme may also be used.

The IEEE 1394 interface 11 is an interface that can control a video device of the so-called DV scheme. Thereby, an operation, such as reproduction, rewinding, or fast feed, of the digital video camera 18 can be controlled from the PC 1. A video signal is also transmitted to the PC 1 via the IEEE 1394 interface 11.

A video device (VTR, for example, the VHS scheme) 19 is connected to the video capture interface 12. The video device 19 may have only a reproduction device (video reproduction device) for an image recorded on videotape, or may have, in addition, a camera for picking up an image. The video capture interface 12 is an interface for inputting a video signal supplied from the video device 19 to the PC 1.

The LAN interface 13 is connected to an HTTP (Hyper Text Transfer Protocol) server 23, an FTP (File Transfer Protocol) server 24, and a mail server 25 via the Internet N. One or more terminal devices 28 to be used by estimate clients who request estimate for vehicle repair cost are connected to the Internet N. As the terminal devices 28, for example, PCs, WSs, mobile computers, PDAs, or portable telephones are used.

A modem 26 is connected to the port 14. The modem 26 is connected to a public network P. One or more terminal devices 28 are connected to the public network P via a modem 27, and the PC 1 and the terminal devices 28 can communicate by using a telephone line.

The port 16 is a port (interface) based on standards such as RS-232C, RS-422, SCSI or universal serial bus (USB). An image scanner 20 or a digital still camera 21 is connected to the port 16. It is also possible to provide an RS-232C port, an RS-422 port, a SCSI port and a USB port separately in the PC 1 respectively as ports 16 and connect the image scanner 20 and the digital still camera 21 simultaneously to the PC1. Or it is also possible to provide at least one of the RS-232C port, the RS-422 port, the SCSI port and the USB port in a plurality of PCs 1 and connect the image scanner 20 and the digital still camera 21 simultaneously to the PCs 1.

The TWAIN interface 15 is an interface that has spread as an image input device API (Application Program Interface) for controlling the digital still camera 21 from the PC 1. By utilizing the TWAIN interface 15, it is possible by means of operation on the PC 1 to control the digital still camera 21 so as to transfer a list of vehicle images and specific images taken by the digital still camera 21 to the PC 1.

Furthermore, the TWAIN interface 15 functions as an interface for controlling the image scanner 20 from the PC 1. By utilizing the TWAIN interface 15, therefore, it is possible by operating the PC 1 to specify a resolution and so on, scan (take in) vehicle images with the image scanner 20, and transfer the images to the PC 1.

The PCMCIA interface 17 is an interface base on the standards of PCMCIA (Personal Computer Memory Card International Association). A PC card (PC card medium) 22 based on the standards of PCMCIA is connected to the PCMCIA interface 17. The PCMCIA interface 17 makes it possible to access vehicle images held in the PC card 22, from the PC 1. Instead of the PC card 22, a recording medium (a removable medium such as a memory stick, a smart medium, or a compact flash) , other than a PC card, attached to an adapter conforming to the standards of PCMCIA can be connected to the PCMCIA interface 17. It is also possible to provide a recording medium interface based on standards other than PCMCIA, instead of the PCMCIA interface 17 or in parallel to the PCMCIA interface 17, in the PC 1, and connect a recording medium based on the standards to the interface.

The display 8 corresponds to a display unit of the present invention. The input device 30 (the keyboard device 9 and the pointing device 10) corresponds to input means of the present invention. The CPU 2 and the I/F 5 correspond to designation display means, input operation screen display means, and operation screen display means of the present invention. The CPU 2 corresponds to registration means and correlation means of the present invention.

### <Processing conducted (performed) by the repair cost estimate system>

As an operation example of the repair cost estimate system, processing conducted when the CPU 2 of the PC 1 executes the estimate software stored in the external storage device 4 will now be described. When taking an image of a vehicle to be repaired in the PC 1 (i.e., inputting an image of a vehicle to be repaired to the PC1), an estimate former for vehicle repair cost (a vehicle repairer or a member of its correlation) starts the estimate software of the PC 1 by operating the input device 30.

Thereupon, the CPU 2 controls the I/F 5 by executing the estimate software, and displays an information input screen (not illustrated) for making the estimate former input information of the vehicle to be repaired (vehicle information such as a vehicle number) and individual information of the owner (owner information such as personal name or company name, address, telephone/FAX number, and electronic mail address) on the display 8.

The estimate former inputs vehicle information and owner information acquired previously from the estimate client, by using the information input screen. At this time, the estimate former determines a reference number for the estimate request, and inputs the reference number as an estimate number. The input vehicle information, owner information, and estimate number are stored in a predetermined storage area of the external storage device 4 as data concerning the estimate.

The method for the estimate former to acquire individual information from the estimate client may be any of word of mouth (including telephone communication), receipt of a document describing individual information (mail, home delivery mail, FAX, or the like) , and transmission and receipt (electronic mail, or the like) of individual information via a network.

After having completed inputting the vehicle information and the owner information, the estimate former designations (operates) to advance to the next step. Thereupon, the CPU 2 controls the I/F 5 to display a screen (referred to as "registration screen") 31 on the display 8 in order to register a video image or an image of the vehicle as a video image or an image of an estimate subject.

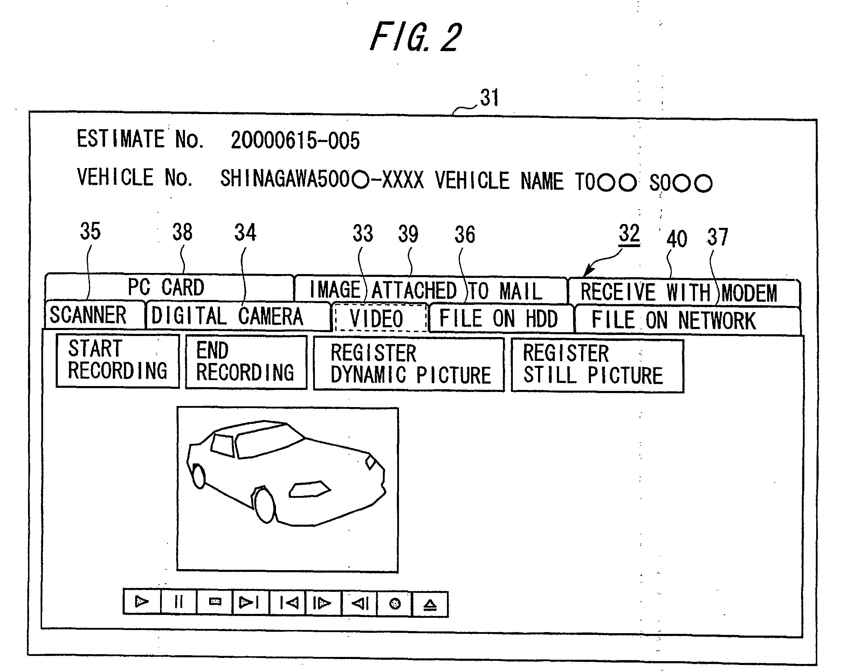

Fig. 2 is a diagram showing an example of display of the registration screen 31. In Fig. 2, the estimate number, the vehicle number, and so on input by using the information input screen are displayed in the registration screen 31. The registration screen 31 includes an operation interface (man-machine interface) for selecting some from a plurality of vehicle image inputting methods and executing image inputting processing (taking-in (capturing) processing).

In Fig. 2, a graphical user interface (GUI) 32 of tab sheet type is shown as a man-machine interface. The GUI 32 includes a plurality of tab sheets 33 to 40 respectively corresponding to input methods of "scanner", "digital camera", "video", "file on HDD", "file on (Inter)net", "PC card", "image attached to mail" and "receive with modem".

The estimate former can specify a tab of a tab sheet corresponding to the selected input method by operating the input device 30 (effecting mouse click, cursor specification, and "ENTER" key inputting) on the tab sheets 33 to 40. By this specification, the specified tab sheet is displayed in the front of the screen.

Tabs of respective tab sheets 33 to 40 correspond to "a designation for prompting to specify one of a plurality of methods for inputting a vehicle image to the computer". The tab sheets 33 to 35, 37, 39 and 40 correspond to an input operation screen of the present invention. The tab sheets 36 and 39 correspond to an operation screen of the present invention.

Each of the tab sheets 33 to 40 includes an operation button of a device corresponding to an input method, a display region (area) of an image or a dynamic picture, and a registration button of an image or a dynamic picture of a vehicle. Hereafter, the tab sheets 33 to 40 and a method of using them will be described individually.

### (Video)

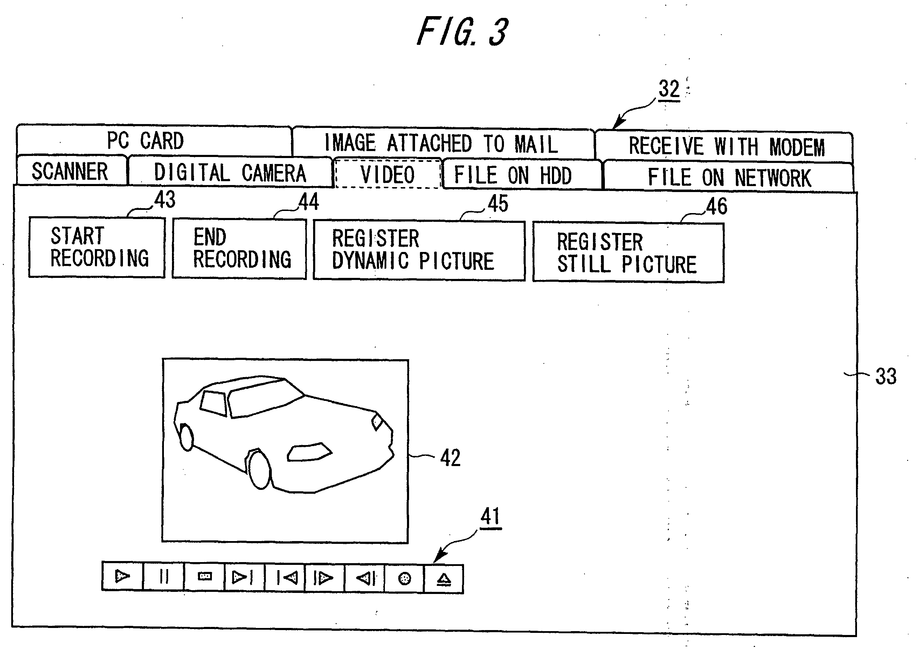

Fig. 3 is a diagram showing a display example of the GUI 32 (tab sheet 33 of "video") in the case where "video" has been selected as an input method. The tab sheet 33 is selected when inputting a dynamic picture or a still picture of the vehicle to the PC 1 (i.e., taking a dynamic picture or a still picture of the vehicle in the PC 1) from the digital video camera 18 or the video device 19.

The tab sheet 33 includes a reproduction operation button group 41, an image display region 42, a recording start button 43, a recording end button 44, a dynamic picture registration button 45, and a still picture registration button 46.

The reproduction operation button group 41 is a button group for designing control concerning image reproduction in the digital video camera 18 or the video device 19. The reproduction operation button group 41 includes a reproduction button, a fast feed button, a rewind button, a reproduction fast feed button, a reproduction rewind button, and a temporary stop button.

The image display region 42 is a display region of a dynamic picture reproduced in the digital video camera 18 or the video device 19. The recording start button 43 is a start button of processing for taking a dynamic picture reproduced by the digital video camera 18 or the video device 19 in the PC 1. The recording end button 44 is an end button of the processing for taking in the dynamic picture.

The dynamic picture registration button 45 is a button for registering a dynamic picture of a vehicle to be repaired taken in the PC 1 as a dynamic picture of the vehicle of the estimate subject. The still picture registration button 46 is a button for registering one frame included in the dynamic picture of the vehicle taken in (input to) the PC 1, as a still picture of a vehicle of the estimate subject.

In this example, the digital video camera 18 and the video device 19 are connected to the PC 1, whereas only the tab sheet 33 of "video" is prepared as a tab sheet for them. The tab sheet 33 is utilized as a tab sheet corresponding to the selected device, in accordance with a result of the estimate former's selection of either the digital video camera 18 or the video device 19 as the device for taking a dynamic picture in the PC 1. This selection work can be conducted by using, for example, a GUI displayed on the display 8. Furthermore, in the case where only one of the digital camera 18 and the video device 19 is connected to the PC 1, the connected one is correlated with the tab sheet 33 automatically or by setting of the operator.

A registration method of a vehicle image using the tab sheet will now be described. As an example, the case where a video image of a vehicle from the digital video camera 18 is taken in the PC 1 will now be described.

First, the estimate former sets a recording medium (such as video tape, a floppy disk, or a memory card) having a dynamic picture of a vehicle received in trust from the estimate client stored thereon, on the digital video camera 18. Or the estimate former receives in trust a digital video camera on which a recording medium having a dynamic picture of a vehicle stored thereon is set (a digital video camera brought by the estimate client) , and connects the digital video camera via the IEEE 1394 interface 11. Or the estimate former sets a recording medium on the digital video camera 18, takes a picture of a vehicle to be estimated with respect to repair cost by using the digital video camera 18, and records a dynamic picture of the vehicle on the recording medium.

Subsequently, the estimate former causes the GUI 32 to be displayed on the display 8 of the PC 1, selects the tab sheet 33, and presses the reproduction button of the reproduction operation button group 41. Thereupon, the CPU 2 gives a control designation to the IEEE 1394 interface 11, and the IEEE 1394 interface 11 controls the digital video camera 18 and the digital video camera 18 starts reproduction of the dynamic picture held in the recording medium mounted thereon.

Thereupon, a signal (video signal) of a reproduced dynamic picture is transferred from the digital video camera 18 to the PC 1, and the CPU 2 causes a dynamic picture corresponding to the input video signal to be displayed in the image display region 42 of the tab sheet 33 by control of the I/F 5.

Thereupon, the estimate former searches the dynamic picture for a scene to be registered as a video image of a vehicle of the estimate subject by pressing each button of the reproduction operation button group 41. If the scene is reproduced, the estimate former presses the recording start button 43. As a result, the CPU 2 starts processing of taking the dynamic picture that is being reproduced in the PC 1. This processing of taking in is conducted (executed) until the estimate former presses the recording end button 44.

By the taking in processing conducted by the CPU 2, a file of a dynamic picture reproduced since the recording start button 43 is pressed until the recording end button 44 is pressed is created on the MM 3 or the external storage device 4. If the estimate former presses the dynamic picture registration button 45, then the dynamic picture file is stored (registered) in a predetermined storage region (for example, a directory (folder) for storing a file of an image of the vehicle of the estimate subject) of the external storage device 4 by the CPU 2. The recording region of the image of the stored vehicle may be set on any recording medium which is installed on or connected to the PC 1 and on which writing can be performed by the PC 1.

In the recording scheme of the digital video camera 18, time information can be recorded. Therefore, it is also possible to take in a video image (dynamic picture) by specifying time information indicating the start position of capture (taking in) and time information indicating the end position and pressing a "capture execution" button, while operating the digital video camera 18. Although not illustrated, it is possible to provide an operation interface (such as a button) for conducting the above-described operation, on the tab sheet 33.

Furthermore, the estimate former can also register one frame (still picture) in a dynamic picture by operating the input device 30. In this example, the estimate former extracts one appropriate frame in a video image that is being reproduced by pressing the temporary stop button of the reproduction operation button group, and presses the still picture registration button 46. Thereupon, the CPU 2 creates a still picture file for the one extracted frame, and stores (registers) the still picture file in a predetermined storage region of the external storage device 4. Furthermore, in the case where the still picture registration button 46 is pressed during reproduction of a dynamic picture, the CPU 2 creates a still picture file for one frame displayed in the image display region 42 when the still picture registration button 46 is pressed, and registers the still picture file in a predetermined storage region of the external storage device 4. It is also possible to take out a still picture from a dynamic picture file taken in the PC 1 and created, and store the still picture.

On the other hand, in the case where a dynamic picture or a still picture is taken in the PC 1 from the video device 19, the following action is conducted. That is, the estimate former specifies the tab sheet 33 of the GUI 32. Subsequently, the estimate former loads the video device 19 with a recording medium having a dynamic picture of the vehicle recorded thereon, and presses a reproduction button (not illustrated) of the video device 19. Thereupon, an analog'video signal of the dynamic picture reproduced in the video device 19 is input to the PC 1 from the video device 19 through the video capture interface 12. The analog video signal is converted to digital data in the PC 1, and stored in the MM 3. Thereafter, the CPU 2 displays a dynamic picture based on digital data stored on the MM3 in the image display region 42 of the tab sheet 33, by control of the I/F 5. As a result, the dynamic picture of the vehicle reproduced in the video device 19 is displayed in the image display region 42. In the same way as the case of the digital video camera 18, the estimate former can store a dynamic picture or a still picture of the vehicle by using the buttons 42 to 45. In the case of the video device 19, however, the reproduction operation button group 19 cannot be used because a computer connection interface for controlling the video device 19 has not spread. The dynamic picture reproduced in the video device 19 may be a dynamic picture picked up by the estimate client and recorded on the recording medium (video tape), or may be a dynamic picture picked up by the estimate former and recorded on the recording medium. An appropriation tab sheet to the video device 19 may also be prepared. The tab sheet in this case has a configuration in which the reproduction operation button group 41 has been removed from the tab sheet 33.

The above-described example is an example in which an image is transferred to the PC 1 by reproducing an image already recorded in an external device (digital video camera 18 or a video device 19). However, a video image that is being picked up by a camera section of the digital video camera 18 (or a video camera connected as the video device 19) may be transferred to the PC 1 directly (in real time). In other words, an image transferred (input) to the PC 1 can also be registered in real time by using the tab sheet 33.

### (Scanner)

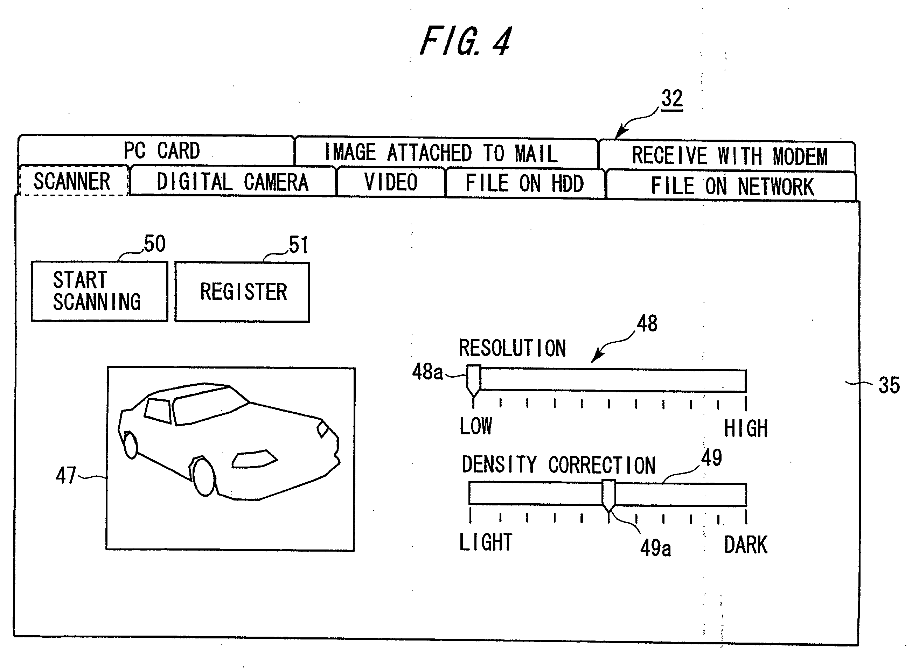

Fig. 4 is a diagram showing a display example of the GUI 32 (tab sheet 35 of the "scanner" in the case where the "scanner" has been selected as the input method. The tab sheet 35 is selected when taking a vehicle image in the PC 1 from the image scanner connected to the PC 1.

The tab sheet 35 includes an image display region 47, a resolution adjustment section 48, a density correction section 49, a reading start button 50, and a registration button 51. The image display region 47 is a region for displaying a vehicle image read by the image scanner 20.

The resolution adjustment section 48 is a GUI for adjusting the resolution of a scanned image. A desired resolution can be set by moving a knob 48a laterally in Fig. 4 by using the input device 30.

The density adjustment section 49 is a GUI for correcting (adjusting) the density of the scanned image. A desired density can be set by moving a knob 49a laterally in Fig. 4 by using the input device 30.

The reading start button 50 is a button for making the image scanner 20 start reading an image (taking an image in the PC 1). The registration button 51 is a button for storing a vehicle image input to (taken in) the PC 1 from the image scanner 20, as an image of the estimate subject.

The input method and the registration method of the vehicle image of the estimate subject using the tab sheet 35 will now be described. The estimate former first sets a photograph or copy paper having a vehicle image printed thereon, in the image scanner 20. The photograph or copy paper may be prepared by the estimate client, or may be prepared by the estimate former.

Subsequently, the estimate former makes the display 8 display the GUI 32, selects the tab sheet 35, and presses the scanning start button 50. Thereupon, the CPU 2 gives a control designation to the TWAIN interface 15, and the TWAIN interface 15 makes the image scanner 20 read an image.

Data concerning the vehicle image read by the image scanner 20 is input to the PC 1 through the port 16. Thereupon, the CPU 2 controls the I/F 5 and displays an image corresponding to the input vehicle image data, in the image display region 47.

The estimate former refers to the image displayed in the image display region 47, and determines whether its resolution and density are proper . If they are not proper, then the estimate former operates the knobs 48a and 49a to adjust the resolution and/or density, and presses the reading start button 50 again.

If a desired image is displayed in the image display region 47, the estimate former presses the registration button 51. Thereupon, the CPU 2 creates a file of the image displayed in the image display region 47, on the MM 3 or the external storage device 4, and stores (registers) the image file in a predetermined storage region of the external storage device 4.

### (Digital still camera)

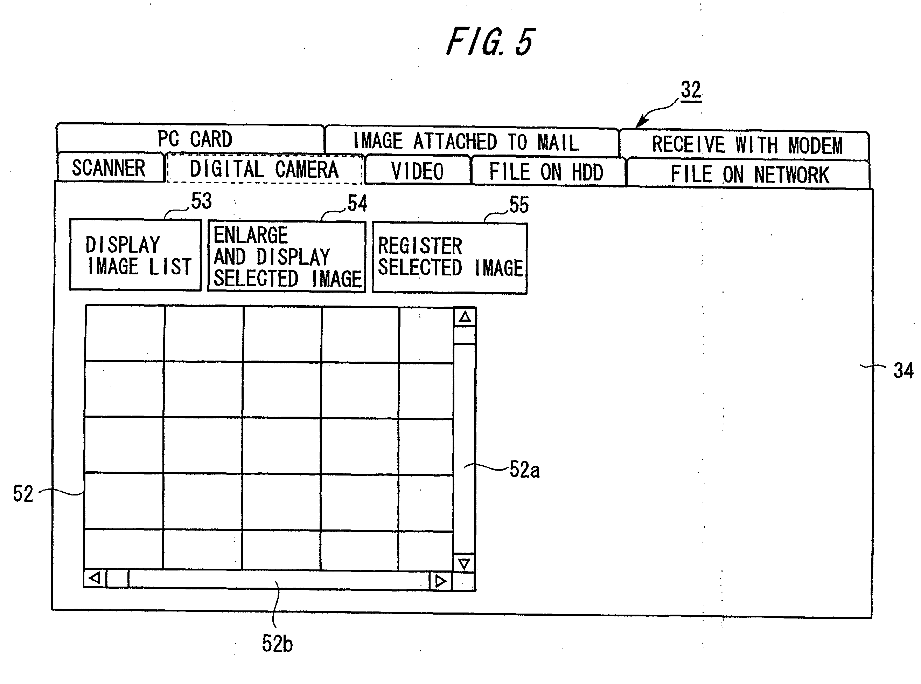

Fig. 5 is a diagram showing the GUI 32 (tab sheet 34 of "digital camera") in the case where "digital camera" has been selected as the input method. The tab sheet 34 is selected when taking an image of a vehicle of the estimate subject in the PC 1 from the digital still camera 21 connected to the PC 1.

The tab sheet 34 includes an image display region 52, an image list display button 53, an enlarged display button 54, and a registration button 55. The image display region 52 is a region for displaying an image (photograph) taken and held by the digital still camera 21, or a list of photographs (a list of images) of a vehicles.

In Fig. 5, a state in which a list of images is displayed is shown. As the list of images, previews of a plurality of vehicle images are displayed. In the image display region 52, scroll bars 52a and 52b respectively of the vertical direction and horizontal direction are provided. By operating the scroll bars 52a and 52b, a desired image from among the images of the list can be displayed in the image display region 52.

The image list display button 53 is a button for designing display of the image list in the image display region 52. If the image list display button 53 is pressed by operation of the input device 30, then data concerning the image list are transferred from the digital still camera 21 to the PC 1 and the image list is displayed in the image display region 52.

The enlarged display button 54 is a button for designing enlarged display of an image selected from among the images of the list by operation of the input device 30. If the enlarged display button 54 is pressed by operation of the input device 30, image data corresponding to an image selected from the list is transferred from the digital still camera 21 to the PC 1, and an enlarged image displays on the image display region 52. The registration button 55 is a button for storing an image selected from among the image list as the image of the vehicle of the estimate subject.

An input method and a storage method of an image of a vehicle of the estimate subject using the tab sheet 34 will now be described. The estimate former first sets a recording medium for digital still camera storing images of a vehicle received in trust from an estimate client, on the digital still camera 28. Or the estimate former connects a digital still camera that holds images of a vehicle received in trust from an estimate client to the PC 1 through the port 16. Or the estimate former takes screens of a vehicle of the estimate subject by using the digital still camera 21, and makes the digital still camera 21 hold images of the vehicle.

Subsequently, the estimate former makes the display 8 display the GUI 32, and selects the tab sheet 34. In succession, the estimate former presses the image list display button 53 of the tab sheet 34. Thereupon, the CPU 2 gives a control designation to the TWAIN interface 15, and the TWAIN interface 15 controls the digital still camera 21 to make the digital still camera 21 transfer data concerning a list of images held in the digital still camera 21 to the PC 1.

If data concerning the image list are input to the PC 1 through the port 16 , then the CPU 2 controls the I/F 5 and displays an image list based on data concerning the image list in the image display region 52.

Thereupon, the estimate former selects an image of the vehicle to be registered from among the list of images by operating the input device 30 and the scroll bars 52a and 52b. If the enlarged display button 54 is pressed in a state in which a certain image is selected, then the CPU 2 gives a designation to the TWAIN interface 15 to acquire image data of the pertinent image from the digital still camera 21, and controls the I/F 5 to conduct enlarged display of the pertinent image data in the image display region 52.

If the image list display button 53 or the enlarged display button 54 is pressed in a state in which the selected image is enlarged and displayed, then the image list is displayed in the image display region 52 again.

When registering the selected image, the estimate former presses the registration button 55. Thereupon, the CPU 2 gives a designation to the TWAIN interface 15, acquires image data of the selected image from, the digital still camera 21, and stores (registers) the image data in a predetermined storage region (such as a directory (folder) for storing the estimate image or video image) of the external storage device 4.

In the above-described example, the case where the image list is transferred from the digital still camera 21 to the PC 1 has been described. However, it is also possible to transfer a specific image from the digital still camera 21 to the PC 1 by using the TWAIN interface 15 and display the specific image in the image display region 52.

### (File on HDD)

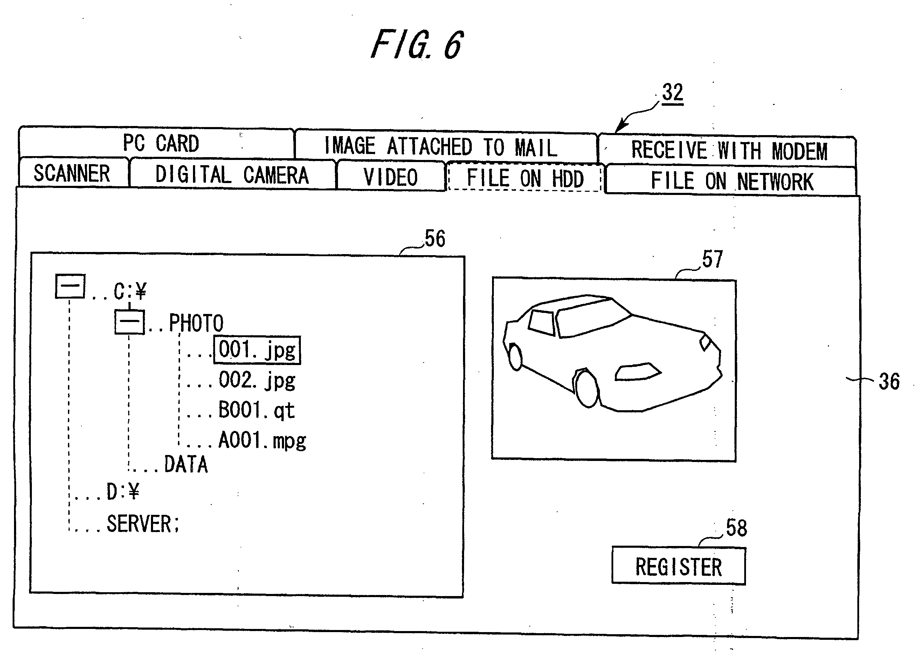

Fig. 6 is a diagram showing a display example of the GUI 32 (the tab sheet 36 of "file on HDD") in the case where "file on HDD" has been selected as the input method. The tab sheet 36 is selected when storing an image (a dynamic picture or a still picture) of the vehicle held in the external storage device (HDD) 4 as an image of the vehicle of the estimate subject.

The tab sheet 36 includes a directory tree display region 56, an image display region 57, and a registration button 58. In the display region 57, a directory tree created in the storage region in the external storage device 4 is displayed, and a file name of a vehicle image stored in each directory is displayed.

In the image display region 57, an image corresponding to an image file selected by using the display region 56 and by operation of the input device 30 is displayed. It is also possible to display a list of images held in the external storage device 4 in the image display region 57 according to display content setting and select a desired image from the image list.

The registration button 58 is a button for registering a vehicle image selected by using the display region 56 or the image display region 57 as the image of the estimate subject.

A registration method of the vehicle image of the estimate subject using the tab sheet 36 will now be described. It is supposed as a premise that the vehicle image of the estimate subject is stored in the external storage device (HDD) 4.

The estimate former makes the display 8 display the GUI 32 and selects the tab sheet 36. Thereupon, the CPU 2 reads out information concerning a directory tree in the external storage device 4 into the MM3 from the external storage device 4, controls the I/F 5, and displays the directory tree in the display region 56.

The estimate former refers to the directory tree, and selects a directory in which a desired image is stored. Thereupon, the CPU 2 displays a list of file names of images stored in the selected directory, in the display region 56. If the estimate former specifies a desired file name by operating the input device 30, then the CPU 2 displays a vehicle image corresponding to the specified file, in the image display region 57.

When registering the image displayed in the image display region 57, the estimate former presses the registration button 58. Thereupon, the CPU 2 stores (registers) a file of the image in a predetermined storage region (such as a directory (folder) for storing a file of an image of the estimate subject). (File on network)

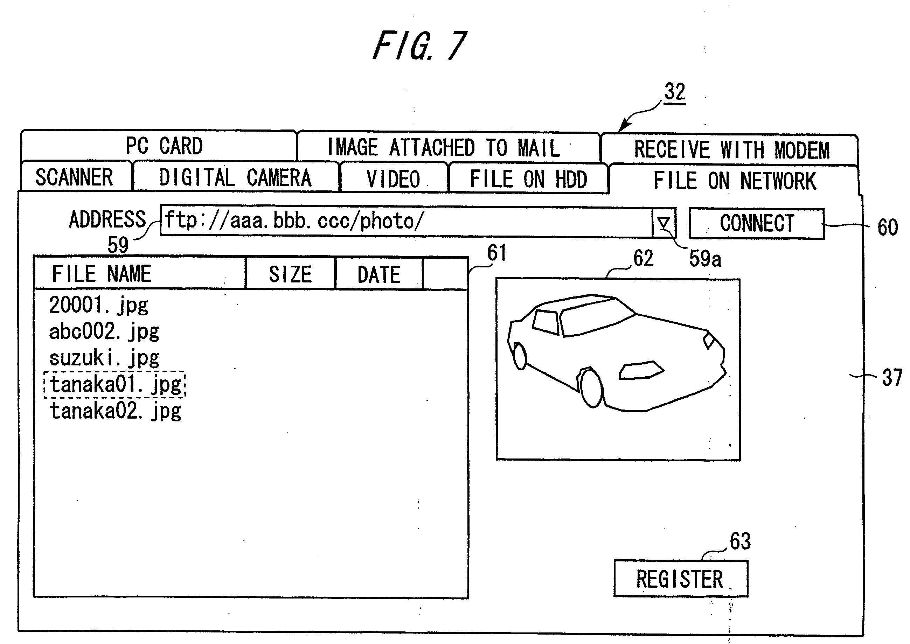

Fig. 7 is a diagram showing a display example of the GUI 32 (the tab sheet 37 of "file on network") in the case where "file on network" has been selected as the input method. The tab sheet 36 is selected when taking a vehicle image in the PC 1 from the HTTP server 23 or the FTP server 24 connected to the PC1 through the network.

The tab sheet 37 includes an address input column 59 of the HTTP server 23 or the FTP server 24, a connection button 60, a file display region 61, an image display region 62, and a registration button 63.

The address input column 59 is a column for inputting an address of the HTTP server 23 or the FTP server 24 that holds a vehicle image to be taken in (to be input). A button 59a is provided in the address input column 59. If the button 59a is pressed, then an address list is displayed and the estimate former can specify a desired address included in the address list.

The connection button 60 is a button for connecting the HTTP server 23 or the FTP server 24 to the PC 1 via a communication line. If the connection button 60 is pressed, call connection processing is conducted between the HTTP server 23 or the FTP server 24 specified by using the address input column 59 and the PC 1, and the HTTP server 23 or the FTP server 24 is connected to the PC 1 through a communication line.

The file display region 61 displays information (file information such as a file name, a size and date) concerning image files held in a storage region corresponding to the specified address of the HTTP server 23 or the FTP server 24 connected through the communication line.

The image display region 62 displays the image corresponding to the file selected by using the file display region 61. The registration button 63 is a button pressed in the case where a selected file is registered as a file of the image of the estimate subject.

An input method and a registration method of the vehicle image of the estimate subject using the tab sheet 37 will now be described. The estimate former prepares the HTTP server 23 or the FTP server 24 to be accessed by the estimate client. The HTTP server 23 or the FTP server 24 is prepared so that the estimate client may access the server with "anonymous" . The "anonymous" is used customarily as an account whereby anyone can access the HTTP server 23 or the FTP server 24 through the Internet N.

The estimate client accesses the HTTP server 23 or the FTP server 24 through the Internet N by using the terminal device 28, attaches an arbitrary file name to an image of the vehicle of the estimate subject taken and recorded by the digital video camera or the digital still camera, and transfers a resultant vehicle image to the HTTP server 23 or the FTP server 24. Upon receiving the image file from the terminal device 28, the HTTP server 23 or the FTP server 24 preserves the file in a predetermined directory provided previously in the HTTP server 23 or the FTP server 24. On the other hand, when requesting the estimate former to form an estimate, the estimate former notifies the estimate client of the image file name.

The estimate former makes the display 8 display the GUI 32, and selects the tab sheet 37. Subsequently, the estimate former enters an address of the HTTP server 23 or the FTP server 24 to be accessed in the address input column 59 by using the input device 30, and then presses the connection button 60.

Thereupon, the HTTP server 23 or the FTP server 24 corresponding to the address is connected to the PC 1 through the communication line. Thereafter, the PC 1 receives file information of vehicle images held by the HTTP server 23 or the FTP server 24, from the HTTP server 23 or the FTP server 24 by using the LAN interface 13. Thereupon, the CPU 2 displays the file information in the file display region 61 by controlling the I/F 5.

The estimate former refers to file information displayed in the file display region 61, and selects a desired file (the file name notified of by the estimate client) . Thereupon, the selected image file is transferred from the HTTP server 23 or the FTP server 24 to the PC 1, and the CPU 2 displays a vehicle image corresponding to the transferred image file, in the image display region 62.

When registering the image displayed in the image display region 62, the estimate former presses the registration button 63. Thereupon, the CPU 2 stores (registers) the file of the pertinent image in a predetermined storage region (such as a directory (folder) storing an image or a video image of the estimate subject).

### (Image attached to mail)

Fig. 7 is a diagram showing a display example of the GUI 32 (the tab sheet 39 of "file on network") in the case where "image attached to mail" has been selected as the input method. The tab sheet 39 is selected when taking a vehicle image in the PC 1 from the mail server 25 connected via the network.

The tab sheet 39 includes a mail reception button 64, a mail list display region 65, a text display region 66, an image display region 67, and a registration button 68. The mail reception button 64 is a button for taking out mail from a mailbox (not illustrated) of the estimate former provided in the mail server 25. If the mail reception button 64 is pressed, then the PC 1 and the mail server 25 are connected to each other through a communication line, and electronic mail including a vehicle image file supplied from the estimate client and preserved in the mail box is transferred to the PC 1.

The mail list display region 65 displays a list of a single or a plurality of electronic mail taken out from the mailbox and transferred to the PC 1. The text display region 66 displays a text of electronic mail selected from the list of mail displayed in the mail list display region 65.

The image display region 67 displays a vehicle image contained in electronic mail selected by using the mail list display region 65. The registration button 63 is a button pressed when registering a file of a vehicle image contained in the selected electronic mail as a file of an image of the estimate subject.

An input method and a registration method of the vehicle image of the repair estimate subject using the tab sheet 39 will now be described. As a premise, the estimate former sets a mail address for receiving a vehicle image from the estimate client, in the mail server 25, or acquires an account from a provider. The estimate client transmits electronic mail containing a vehicle image of the estimate subject from the terminal device 28 to the mail server 25. As a result, the mail server 25 preserves the received electronic mail in the mailbox of the estimate former.

The estimate former makes the display 8 display the GUI 32, and selects the tab sheet 39. Subsequently, the estimate former presses the mail reception button 64. Thereupon, the PC 1 and the mail server 25 are connected to each other through a communication line. The mail server 25 takes out pertinent electronic mail from the pertinent mailbox, and transmits the electronic mail to the PC 1. If the PC 1 receives electronic mail in the LAN interface 13, then the CPU 2 preserves the received electronic mail in a local mailbox provided in the external storage device 4. Subsequently, the CPU 2 displays a list of received electronic mail in the mail list display region 65.

The estimate former refers to the mail list displayed in the mail list display region 65, and selects desired electronic mail. Thereupon, the CPU 2 displays a text of the selected electronic mail in the text display region 66, and displays an image corresponding to an image file contained in the image display region 67.

When registering the image displayed in the image display region 67, the estimate former presses the registration button 68. Thereupon, the CPU 2 stores (registers) a file of the image in a predetermined storage region (such as a directory (folder) for storing an image (still picture) or a video image (dynamic picture) of the estimate subject).

### (PC card)

Fig. 7 is a diagram showing a display example of the GUI 32 (the tab sheet 38 of "PC card") in the case where "PC card" has been selected as the input method. The tab sheet 38 is selected when taking a vehicle image in the PC 1 from the PC card 22 connected to the PC 1.

The tab sheet 38 includes a file list display region 69, an image display region 70, and a registration button 71. The file list display region 69 displays a list of vehicle image files held in the PC card 22.

In the image display region 70, an image corresponding to an image file selected by using the display region 69 is displayed. It is also possible to display a list of images held in the PC card 22 and select a desired image from the image list depending on the setting of display contents in the image display region. The registration button 63 is a button for registering the selected vehicle image file as the image file of the estimate subject.

A registration method of the vehicle image of the estimate subject using the tab sheet 38 will now be described. It is supposed as a premise that the PC card 22 having the file of the vehicle image to be registered connected to the PC 1.

The estimate former makes the display 8 display the GUI 32 and selects the tab sheet 38. Thereupon, the CPU 2 serving as the OS acquires information of a physical device correlated with a logical drive, acquires contents of the logical drive (a list of files) for which the physical device is the PC card 22, and displays the contents of the logical drive in the file list display region 69. At this time, if a directory tree is created in the PC card 22, then the directory tree is displayed in the file list display region 69.

The estimate former refers to the file list or the directory tree displayed in the file list display region 69, and selects a desired file by operating the input device 30. Thereupon, the CPU 2 displays an image corresponding to the selected file in the image display region 70.

When registering the image displayed in the image display region 70, the estimate former presses the registration button 71. Thereupon, the CPU 2 stores (registers) a file of the image in a predetermined storage region (such as a directory (folder) for storing a file of an image of the estimate subject).

### (Receive with modem)

Fig. 7 is a diagram showing a display example of the GUI 32 (the tab sheet 40 of "receive with modem") in the case where "receive with modem" has been selected as the input method. The tab sheet 40 is selected when taking a vehicle image in the PC 1 from the terminal device 28 connected to the PC 1 through the public network P.

The tab sheet 40 includes a modem display column 72, a call incoming wait button 73, a telephone acquisition button 74, and a destination telephone number display column 75. The modem display column 72 is used to specify the kind of the modem 26 connected to the PC 1. The call incoming wait button 73 is a button for setting the modem 26 to an automatic call incoming mode. If the call incoming wait button 73 is pressed, then the modem 26 assumes the automatic call incoming mode, and assumes a state in which call incoming from the terminal device 28 of the estimate client is waited for. Thereafter, if the modem 26 detects call incoming from the terminal device 28, then the modem 26 starts reception processing of a vehicle image transmitted from the terminal device 28 in accordance with a predetermined protocol.

The telephone acquisition button 74 is a button for acquiring a vehicle image held in the terminal device 28 of the estimate client by placing a telephone call to the terminal device 28. The display column 75 is used to enter the telephone number of the destination of the telephone call (terminal device 28). If the telephone acquisition button 74 is pressed in a state in which the telephone number of the destination is displayed in the display column, then call connection processing between the PC 1 and the terminal device 28 corresponding to the destination is conducted through the modem 26, the public network P and the modem 27, and the PC 1 and the terminal device 28 are connected to each other via a communication line. Thereafter, the vehicle image file held in the terminal device 28 is transmitted from the terminal device 28 in accordance with a predetermined communication protocol, and the vehicle image file is received by the PC 1. If at this time a general-purpose file transfer protocol is used, then a file name of an image that becomes the subject of transmission from the terminal device 28 is specified in the PC 1.

If the PC 1 receives a vehicle image file from the terminal device 28 by the above described call incoming wait or telephone acquisition, the CPU 2 stores (registers) the file of the image in a predetermined storage region (such as a directory (folder) for storing a video image of the estimate subject).

By using the tab sheets 33 to 40 heretofore described, the estimate former can register a single or a plurality of images of a vehicle of the estimate subject. In the present embodiment, tab sheets respectively corresponding to the HDD serving as the external storage device 4 and to the PC card 22 are prepared as the recording media connected to the PC 1. On the other hand, in the case where the CPU 2 is brought to a state in which the CPU 2 can read out data from a recording medium (such as an FD, an optical disk, an MO, a smart medium, a compact flash, or a memory stick) other than the HDD and the PC card 22, a tab sheet is prepared for each recording medium. In other words, a tab sheet is prepared for each of recording media (each of logical drives) the CPU 2 can access. In the case where a plurality of HDDs are provided, a tab sheet is prepared for each of the HDDs.

### <Processing after registration>

As described above, the estimate former can store (register) a file of a video image or a file of a vehicle that is the estimate subject, in a predetermined storage region (directory) of the external storage device 4 by using the tab sheets 33 to 40 of the GUI 32. At this time, the CPU 2 automatically sets a file name according to a predetermined rule, for a file to be registered. For example, the CPU 2 sets a file name containing date (date when registration has been conducted) and time when taking in the PC 1 has been executed, as the file name to be stored. By doing so, a file name that does not duplicate can be created easily. Furthermore, it is desirable that the file name contains a character string that indicates a file format, such as an "extension" in a file system of Windows.

Subsequently, the CPU 2 correlates an estimate number input in an information input picture, which is not illustrated, with a file registered in a predetermined directory, and records them in the external storage device 4. For example, the CPU 2 creates a management table 76 in which estimate numbers are correlated with file names of registered files, and records the management table 76 in the external storage device 4.

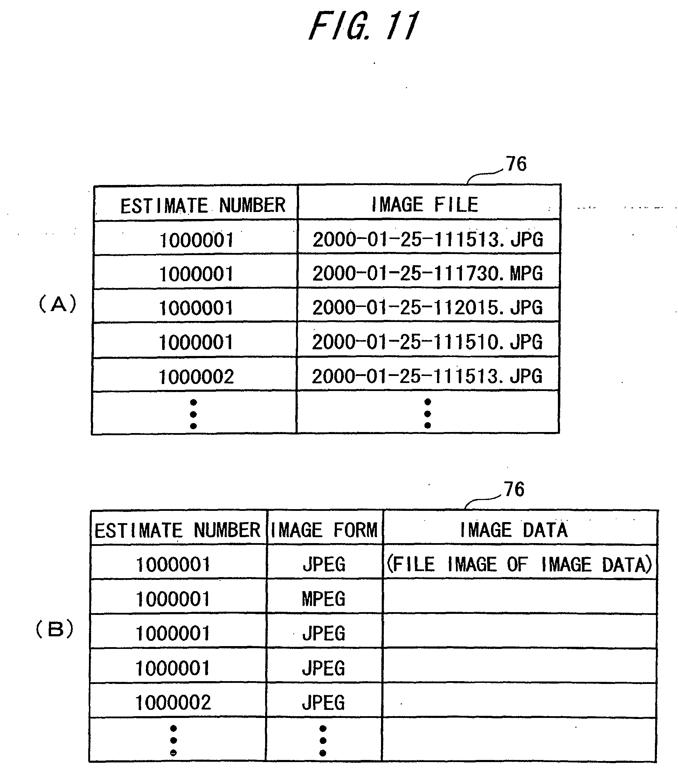

Fig. 11 is a diagram showing an example of the management table 76. In an example shown in Fig. 11(A), four image files are correlated with estimate data of an estimate number 1000001. As shown in Fig. 11(B), a table in which file formats and file images of image are correlated with each estimate number may be created as the management table 76.

Thereafter, the estimate former forms a repair cost estimate by referring to a video image or an image of a vehicle corresponding to an estimate number, and preserves the estimate in the external storage device 4. And the estimate former gives notice of (transmits) the estimate result to the estimate client by using an appropriate transfer technique.

### <Operation of embodiment>

According to the embodiment heretofore described, the estimate former can take in and register a vehicle image of the estimate subject by executing estimate software, using the GUI 32 displayed on the display 8 of the PC 1, and using an input method of "scanner", "digital camera", "video", "file on HDD", "file on network" , "PC card", "image attached to mail" or "receive with modem". In other words, with only execution of one application (program), i.e., the estimate software, a vehicle image can be input to (registered in) the PC 1 using various input methods.

In this way, input operation screens corresponding to various input methods are provided by one application. Therefore, the estimate former can conduct various input methods in one procedure. Therefore, the estimate former can conduct the image inputting work smoothly and simply. In other words, it is not necessary to prepare individually applications according to input devices (input methods) of a vehicle image. Furthermore, it is not necessary to execute an application according to an input device (input method) in parallel with estimate software, either. As a result, it is possible to attain reduction of the processing burden of the CPU 2 of the PC 1 and efficient use of hardware resources.

Furthermore, in each of the tab sheets 33 to 40, a registration button is provided. In other words , since the input operation screen and the storage screen are provided as one picture, the estimate former can conduct the input work and the storage work of a vehicle image in one flow and the works can be made smooth.

Furthermore, by using various input methods, the preservation place of a video image or an image to be registered becomes more definite as compared with the conventional case where all images are preserved in one file system. Unlike the conventional technique, therefore, the burden that the estimate former must grasp which image file is stored in which directory in the file system is reduced.

Furthermore, in the embodiment, acquisition of an image from the external storage device (HDD) 4 and acquisition of an image from the PC card 22 (a recording medium other than the hard disk) are conducted using different tab sheets. Therefore, the estimate former does not need to definitely know the relation between logical drives and physical devices corresponding to respective drives. In other words, it is not necessary to know which drive corresponds to the external storage device 4 and which drive corresponds to the PC card 22.

Owing to them, it becomes possible for the estimate former to conduct the input work and registration work of an image of a vehicle of the estimate subject.

Furthermore, if in the embodiment a video image or an image is input to (taken in) the PC 1 and registered, then the video image or image is automatically correlated with an estimate number (estimate data). Therefore, the estimate former does not need conduct operation of correlating a video image or an image with estimate data. As compared with the conventional technique, therefore, complicatedness of the operation of the estimate former is reduced.

Furthermore, since the embodiment becomes a system in which the estimate former does not need conduct work of taking a picture of and recording a vehicle (the estimate client prepares a video image or an image of a vehicle) , the work quantity of the estimate former can be reduced.

### <Variant>

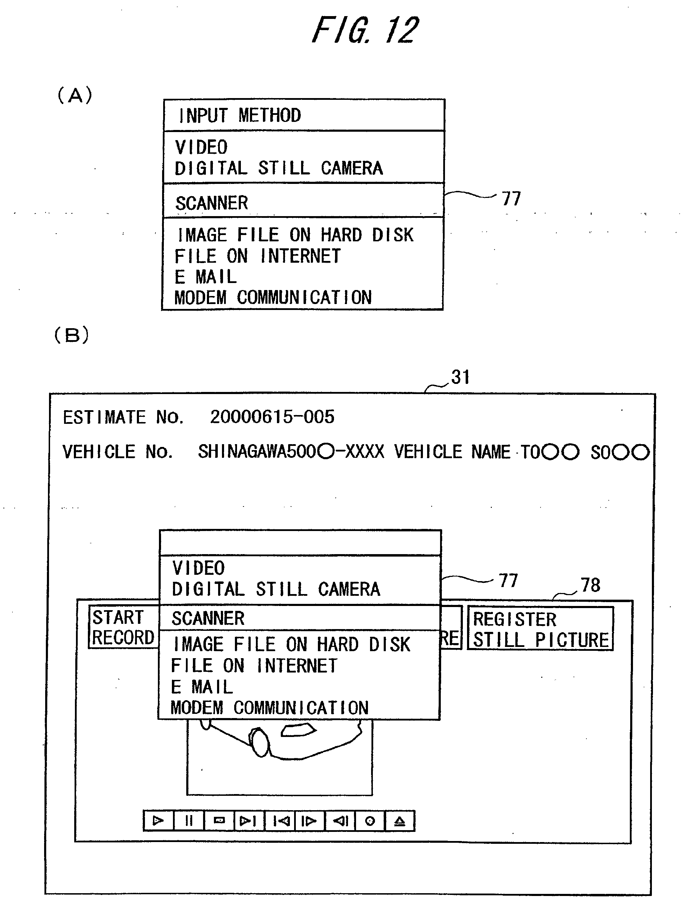

In the above-described embodiment, the GUI 32 formed of a plurality of tab sheets 33 to 40 is displayed on the registration screen 31. Instead of this, it is also possible that a window 77 for selecting an input method shown in Fig. 12(A) (see Fig. 12 (B) , the window 77 corresponds to "a designation for prompting to specify some of a plurality of methods for inputting a vehicle image to the computer" of the present invention) is displayed in the registration screen 31, and a window 78 (corresponding to the input operation screen and operation screen of the present invention) of an operation interface corresponding to an input method selected by the window 77 is displayed in the registration screen 31. The window 78 according to each input method has the same configuration (button, display region, and input column) as each of the tab sheets 33 to 40.

## Claims

1. A vehicle repair cost estimate system for forming an estimate by inputting an image of a vehicle that is a subject of forming a repair cost estimate, to a computer, the vehicle repair cost estimate system comprising:
a display unit;
input means for inputting data or instructions corresponding to display contents of the display unit to the computer;
instruction display means for displaying an instruction for prompting to designate one of a plurality of methods for inputting a vehicle image to the computer, on the display unit; and
input operation screen display means for displaying an input operation screen according to the designated method, on the display unit.

2. A vehicle repair cost estimate system according to claim 1, further comprising:
registration means for registering an image of a vehicle input to the computer by using the input operation screen, as an image of a vehicle of an estimate subject.

3. A vehicle repair cost estimate system according to claim 1 or 2, further comprising:
an operation screen display means for displaying an operation screen for registering an image of a vehicle held on a recording medium connected to the computer as an image of a vehicle of an estimate subject, according to a type of the recording medium.

4. A vehicle repair cost estimate system according to claim 2, further comprising:
correlation means for correlating an image of a vehicle registered by the registration means with data concerning estimate input by using the input means.

5. A vehicle repair cost estimate system according to claim 1, wherein the input operation screen display means displays an input operation screen for registering an image of a vehicle picked up by a video camera connected to the computer or an image of a vehicle reproduced by a video reproduction device, as an image of a vehicle of an estimate subject.

6. A vehicle repair cost estimate system according to claim 1 or 5, wherein the input operation screen display means displays an input operation screen for inputting an image of a vehicle from a video camera or a video reproduction device to the computer by operating, on the computer, the video camera or video reproduction device connected to the computer.

7. A vehicle repair cost estimate system according to claim 1, 5 or 6, wherein the input operation screen display means displays an input operation screen for inputting an image of a vehicle from an image scanner to the computer by operating, on the computer, the image scanner connected to the computer.

8. A vehicle repair cost estimate system according to any one of claims 1, and 5 to 7, wherein the input operation screen display means displays an input operation screen for inputting an image of a vehicle from a digital still camera to the computer by operating, on the computer, the digital still camera connected to the computer.

9. A vehicle repair cost estimate system according to any one of claims 1, and 5 to 8, wherein the input operation screen display means displays an input operation screen for the computer to receive an image of a vehicle from another computer that holds the image of the vehicle and that is connected to the computer through a communication line.

10. A vehicle repair cost estimate system according to claim 9, wherein another computer is an HTTP server.

11. A vehicle repair cost estimate system according to claim 9, wherein another computer is an FTP server.

12. A vehicle repair cost estimate system according to claim 9, wherein another computer is a mail server.

13. A vehicle repair cost estimate system according to claim 9, wherein another computer is a terminal device operated by a client of estimate formation.

14. A vehicle repair cost estimate system according to claim 3, wherein the input operation screen display means displays an operation screen for registering an image of a vehicle held on a hard disk, and an operation screen for registering an image of a vehicle held on a recording medium, other than the hard disk, connected to the computer, in accordance with the designation.
